# FASCICULE DE BREVET EUROPEEN

(11) **EP 1 111 713 B1**
(45) Date de publication et mention de la délivrance du brevet: **18.06.2008**
(21) Numéro de dépôt: 00403516.8
(22) Date de dépôt: 14.12.2000
(51) Int. Cl.: H01Q 1/24, H04M 1/02

(54) **Téléphone portable avec une antenne et un plan de masse**
Mobiltelefon mit einer Antenne und einer Grundplatte
Mobile phone with an antenna and a base plate

(30) Priorité: 23.12.1999 FR 9916335
(43) Date de publication de la demande: 27.06.2001
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Attimont, Luc, 78100 Saint Germain En Laye (FR); Bodin, Jannick, 92380 Garches (FR)
(74) Mandataire: Feray, Valérie

(56) Documents cités:
- EP-A- 0 652 646
- WO-A-99/54956
- FR-A- 2 724 772
- US-A- 5 170 173
- US-A- 5 561 437
- US-A- 6 011 519
- PATENT ABSTRACTS OF JAPAN vol. 017, no. 456 (E-1418), 20 août 1993 (1993-08-20) & JP 05 102719 A (MATSUSHITA ELECTRIC IND CO LTD), 23 avril 1993 (1993-04-23)
- PATENT ABSTRACTS OF JAPAN vol. 1996, no. 01, 31 janvier 1996 (1996-01-31) & JP 07 249916 A (KENJI HARADA), 26 septembre 1995 (1995-09-26)

## Description

La présente invention est relative à un terminal de radiocommunications et plus particulièrement à un téléphone mobile.

L'efficacité d'une antenne d'un téléphone mobile dépend, entre autres, de la taille de l'antenne et de celle du plan de masse associé, et ainsi de la longueur du dipôle constitué par l'antenne et le plan de masse. Dans un téléphone mobile, c'est la carte à circuits imprimés, ou carte PCB (pour « Printed circuit board » en anglais) qui joue le rôle de plan de masse. Toutefois, plus la carte PCB est petite, plus son efficacité comme plan de masse est réduite.

Or, la tendance actuelle des terminaux de radiocommunication et en particulier des téléphones mobiles vise à réduire la taille et le poids des terminaux au maximum, ce qui entraîne par conséquent aussi une réduction de la taille de la carte PCB et grève ainsi l'efficacité de l'antenne.

Pour un téléphone mobile, les conséquences sont importantes, car la perte d'efficacité de l'antenne doit être compensée par une augmentation de la puissance de rayonnement radio, entraînant ainsi une plus grande consommation d'énergie. On comprend donc que l'autonomie d'un tel terminal est réduite.

Le constructeur de téléphones mobile se trouve donc pris entre deux contraintes importantes : diminuer la taille du téléphone, et donc de la carte PCB avec toutes les conséquences que cela entraîne où d'avoir une carte PCB grande avec pour résultat que son téléphone peut être considéré comme trop encombrant par les clients.

Le document WO99/54956 décrit un téléphone mobile à volet rabattable, comprenant un boîtier supérieur avec une antenne et un plan de masse pour l'antenne, le plan de masse comprenant une carte de circuits imprimés logée dans le boîtier supérieur et une extension du plan de masse constituée d'un support portant un conducteur.

La présente invention vise à pallier cet inconvénient en proposant un terminal de radiocommunication dont les dimensions apparentes peuvent être aussi petites que souhaitées tout en maintenant une efficacité d'antenne suffisante.

A cet effet, l'invention a pour objet un terminal de radiocommunications portable comprenant un boîtier, une antenne pour la radiocommunication, et un plan de masse pour ladite antenne, ledit plan de masse comprenant une carte de circuits imprimés logée dans le boîtier, caractérisé en ce que ledit plan de masse comprend, en outre, à l'extérieur dudit boîtier et reliée électriquement à ladite carte, au moins une portion allongée et souple d'une matière électriquement conductrice, pouvant s'étendre librement depuis ledit boîtier.

Le terminal selon l'invention peut comporter une ou plusieurs des caractéristiques suivantes :
- ladite portion allongée est fixée à une extrémité longitudinale de la carte à circuits imprimés,
- ladite portion allongée comprend un fil électriquement conducteur,
- ladite portion allongée comprend une rangée de fils électriquement conducteur,
- ladite portion allongée comprend une bande d'un matériau électriquement conducteur,
- ladite bande porte des moyens permettant de la fixer sur le boîtier du téléphone de manière à protéger au moins en partie l'interface homme-machine du téléphone, en particulier en mode veille,
- la portion allongée comprend à son extrémité libre un moyen de lestage,
- la portion allongée porte au niveau de son extrémité libre des moyens de couplage électrique à une partie du corps d'un utilisateur du terminal, de sorte que celui-ci forme une extension supplémentaire du plan de masse de la carte de circuits imprimés,
- les moyens de couplage électrique comprennent une capacité,
- ladite la portion allongée est revêtue d'une couche électriquement isolante de sorte que ladite capacité est formée par la partie de la portion allongée destinée à être en contact avec une partie du corps de l'utilisateur, cette partie du corps de l'utilisateur et la couche isolante entre ces deux parties.

D'autres caractéristiques et avantages de la présente invention ressortiront de la description suivante, donnée à titre d'exemple non limitatif, en regard des dessins annexés sur lesquels :
- La figure 1 est une vue schématique en perspective d'un terminal selon l'invention,
- La figure 2 est une vue en coupe du terminal de la figure 1.

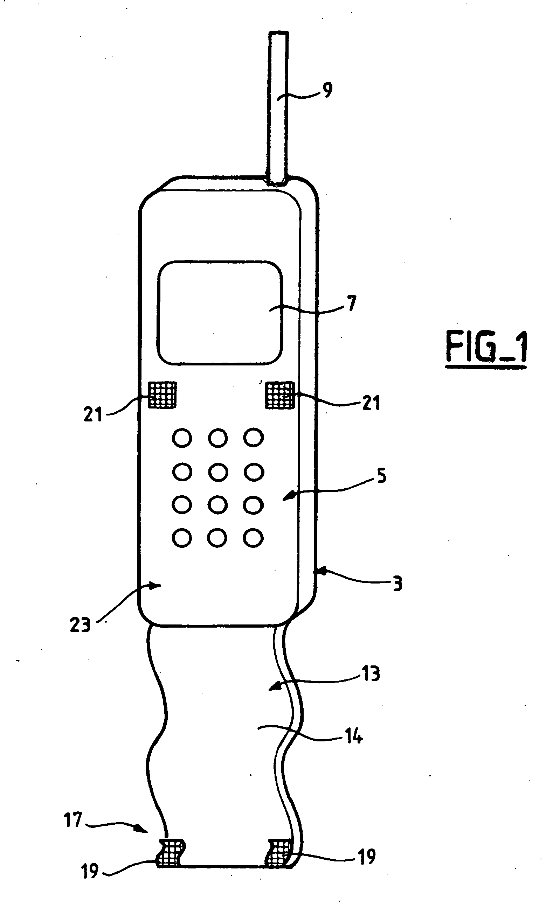

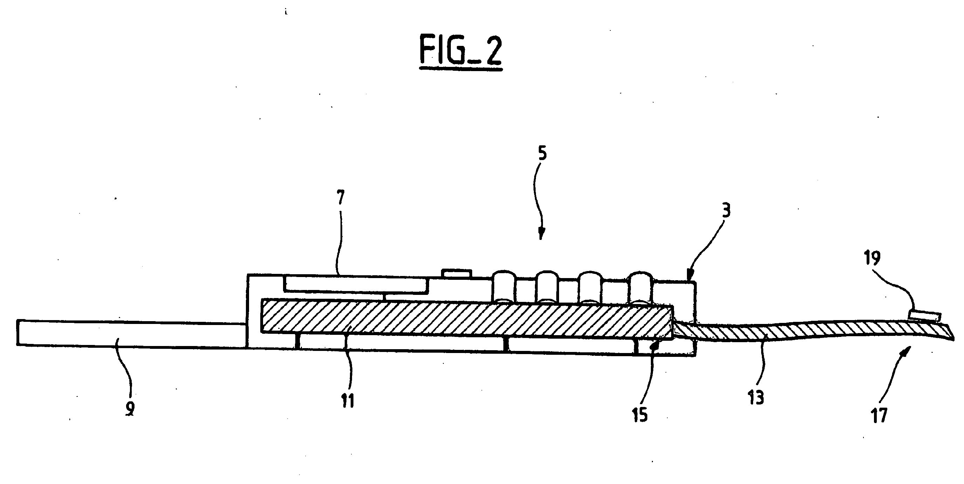

Sur les figures 1 et 2 est représenté un terminal 1 portable de radiocommunications selon l'invention, tel qu'un téléphone mobile ou par exemple un « pager » également appelé récepteur de poche.

Ainsi que l'on voit sur la figure 1, ce terminal 1 possède principalement un boîtier 3, un clavier 5, un affichage 7 et une antenne 9 de radiocommunications.

En référence à la figure 2, on voit qu'une carte 11 à circuits imprimés, également appelé carte PCB (pour « printed circuit board » en anglais) est logée dans le boîtier 3 du terminal. Cette carte PCB porte généralement les processeurs et les circuits d'émission et de réception (comme les circuits synthétiseur) etc.

Cette carte PCB 11 joue en outre, par rapport à l'antenne 9, le rôle d'un plan de masse.

Selon une caractéristique de l'invention, le terminal comprend de plus une portion 13 de forme allongée et souple d'une matière électriquement conductrice, par exemple du métal. Sur les figures 1 et 2, cette portion allongée 13 est une bande 14, mais d'autres formes de réalisation peuvent être envisagées, comme par exemple un fil métallique, une rangée de fils métalliques, une grille souple ou une chaîne.

Comme on voit sur la figure 2, cette portion 13 est connectée à la carte PCB 11, de préférence à une extrémité longitudinale 15 de celle-ci, pour ainsi agrandir le plan de masse et, par conséquent, le dipôle électrique formé par l'antenne et le plan de masse. Elle peut s'étendre librement depuis le boîtier 3 du terminal.

De la souplesse du matériau conducteur résulte que la taille effective du terminal 1 selon l'invention n'est pas agrandie lorsque le terminal est rangé par exemple dans une poche ou un sac, car la portion allongée 13 se plie facilement et s'accommode sans difficultés à la forme du rangement dans lequel le terminal est inséré.

En communication, la portion allongée 13 est déployée et pend librement vers le bas par la seule force de la gravité, ce qui a pour effet d'agrandir le plan de masse et donc l'efficacité de l'antenne 9.

On comprend donc que la portion allongée et souple 13 d'un matériau conducteur reliée à la carte à circuits imprimés 11 permet d'avoir un téléphone portable de taille réduite, en particulier en mode veille et lorsque le téléphone est rangé, tout en présentant une antenne avec une efficacité accrue grâce au plan de masse agrandi par la portion 13.

Avantageusement, comme cela est représenté à la figure 1, la portion allongée 13, sous forme de bande, comporte à son extrémité libre 17 des attaches 19, par exemple du type connu sous la marque déposée « VELCRO », destinées à coopérer avec des moyens complémentaires 21 portés par le boîtier du téléphone. En mode veille, la bande 14 peut être rabattue sur le clavier 5 pour protéger celui-ci. Bien entendu, on peut également envisager que la longueur de la bande 14 est telle que toute la façade frontale 23 du boîtier peut être recouverte par la bande 13 pour protéger toute l'interface homme - machine du téléphone.

Par ailleurs, la portion allongée peut être non traitée ou être revêtue d'une couche de protection, par exemple en matière plastique ou en caoutchouc.

Selon une variante de l'invention, il est prévu de pourvoir l'extrémité libre 17 de la portion allongée 13 d'un moyen de lestage. Ce moyen de lestage peut être tout simplement un poids attaché à l'extrémité libre 17 ou une partie renforcée de cette extrémité 17.

Selon un mode de réalisation préféré dans lequel la portion allongée est un fil métallique ou une chaîne métallique, le moyen de lestage peut être réalisé sous la forme d'un bijou.

Selon encore un autre moyen de réalisation, la portion allongée est une chaîne métallique se terminant par un porte-clé jouant, en particulier avec les clés portées, un moyen de lestage de sorte qu'en communication la portion allongée 13 est toujours déployée.

On envisage également que la portion allongée 13 est réalisée sous la forme d'une chaîne ou d'un fil métallique qui se termine par un moyen de fixation à un accessoire de l'utilisateur, tel qu'un sac ou un vêtement, pour empêcher le vol du terminal ou sa perte.

Selon un autre mode de réalisation préférentiel, la portion allongée 13 porte au niveau de son extrémité libre 17 des moyens de couplage électrique à une partie du corps d'un utilisateur du terminal, de sorte que celui-ci forme une extension supplémentaire du plan de masse de la carte de circuits imprimés.

Ainsi, l'efficacité de l'antenne est encore augmentée.

Préférentiellement, ce couplage est réalisé de manière capacitive.

A cet effet, la portion allongée 13, est revêtue d'une couche électriquement isolante de sorte qu'une capacité est formée par la partie de la portion allongée destinée être en contact avec une partie du corps de l'utilisateur, cette partie du corps de l'utilisateur et la couche isolante entre ces deux parties.

Ce mode de réalisation est très avantageux pour des téléphones portables très petits comme par exemple ceux incorporés dans une montre ou dans une broche. Dans le cas d'un téléphone incorporé dans une montre par exemple, on peut prévoir que la portion allongée 13 est, ou forme au moins une partie du bracelet et permet un couplage capacitif avec le corps de l'utilisateur. Ceci permet d'augmenter l'efficacité de l'antenne sans que l'aspect extérieur du téléphone soit modifié.
On voit donc que le terminal selon l'invention permet d'augmenter de manière considérable l'efficacité de l'antenne de radiocommunication, en particulier pour des téléphones portables de très petite taille.

## Revendications

1. Terminal de radiocommunications portable comprenant un boîtier (3), une antenne (9) pour la radiocommunication, et un plan de masse pour ladite antenne (9), ledit plan de masse comprenant une carte (11) de circuits imprimés logée dans le boîtier (3), ledit plan de masse comprenant, en outre, à l'extérieur dudit boîtier (3) et reliée électriquement à ladite carte (11), au moins une portion (13) allongée pouvant s'étendre depuis le boîtier, **caractérisé en ce que** ladite portion est souple et d'une matière électriquement conductrice, de façon à pouvoir s'étendre librement depuis ledit boîtier (3).

2. Terminal selon la revendication 1, **caractérisé en ce que** ladite portion (13) allongée est fixée à une extrémité longitudinale (15) de la carte (11) à circuits imprimés.

3. Terminal selon la revendication 1 ou 2, **caractérisé en ce que** ladite portion allongée comprend un fil électriquement conducteur.

4. Terminal selon la revendication 3, **caractérisé en ce que** ladite portion allongée comprend une rangée de fils électriquement conducteur.

5. Terminal selon la revendication 1 ou 2, **caractérisé en ce que** ladite portion (13) allongée comprend une bande (14) d'un matériau électriquement conducteur ou une grille souple.

6. Terminal selon la revendication 5, **caractérisé en ce que** ladite bande porte des moyens (19) permettant de la fixer sur le boîtier du téléphone de manière à protéger au moins en partie l'interface homme-machine (5, 7) du téléphone, en particulier en mode veille.

7. Terminal selon l'une quelconque des revendications 1 à 6, **caractérisé en ce que** la portion allongée (13) comprend à son extrémité libre un moyen de lestage.

8. Terminal selon l'une quelconque des revendications 1 à 7, **caractérisé en ce que** la portion allongée porte au niveau de son extrémité libre des moyens de couplage électrique à une partie du corps d'un utilisateur du terminal, de sorte que celui-ci forme une extension supplémentaire du plan de masse de la carte de circuits imprimés.

9. Terminal selon la revendication 8, **caractérisé en ce que** les moyens de couplage électrique comprennent une capacité.

10. Terminal selon la revendication 9, **caractérisé en ce que** ladite la portion allongée est revêtue d'une couche électriquement isolante de sorte que ladite capacité est formée par la partie de la portion allongée destinée à être en contact avec une partie du corps de l'utilisateur, cette partie du corps de l'utilisateur et la couche isolante entre ces deux parties.

## Claims

1. A portable radiocommunications terminal comprising a casing (3), an antenna (9) for radiocommunications, and a ground plane for said antenna (9), said ground plane comprising a printed circuit card (11) housed in the casing (3), said ground plane further comprising outside said casing (3) and electrically connected to said card (11), at least one elongated portion (13) which may extend from the casing, **characterized in that** said portion is flexible and in an electrically conducting material, so as to be able to freely extend from said casing (3)

2. The terminal according to claim 1, **characterized in that** said elongated portion (13) is attached to a longitudinal end (15) of the printed circuit card (11).

3. The terminal according to claim 1 or 2, **characterized in that** said elongated portion comprises an electrically conducting wire.

4. The terminal according to claim 3, **characterized in that** said elongated portion comprises a row of electrically conducting wires.

5. The terminal according to claim 1 or 2, **characterized in that** said elongated portion (13) comprises a strip (14) of an electrically conducting material or a flexible grid.

6. The terminal according to claim 5, **characterized in that** said strip bears means (19) with which it may be attached onto the casing of the telephone so as to protect at least partly the man-machine interface (5, 7) of the telephone, in particular in a standby mode.

7. The terminal according to any of claims 1 to 6, **characterized in that** the elongated portion (13) comprises at its free end, a ballasting means.

8. The terminal according to any of claims 1 to 7, **characterized in that** the elongated portion bears at its free end, means for electric coupling to a portion of the body of a user of the terminal, so that the latter forms an additional extension of the ground plane of the printed circuit card.

9. The terminal according to claim 8, **characterized in that** the electric coupling means comprise a capacitor.

10. The terminal according to claim 9, **characterized in that** said elongated portion is coated with an electrically insulating layer so that said capacitor is formed by the part of the elongated portion intended to be in contact with a part of the body of the user, this part of the body of the user and the insulating layer between both parts.

## Patentansprüche

1. Tragbares Funkkommunikationsterminal, ein Gehäuse (3), eine Antenne (9) für die Funkkommunikation und einen Massenplan für die Antenne (9) umfassend, wobei der Massenplan eine in dem Gehäuse (3) untergebrachte Schaltungskarte (11) umfasst, wobei der Massenplan weiterhin außerhalb des Gehäuses (3) und elektrisch mit der Karte (11) verbunden mindestens einen verlängerten Abschnitt umfasst, der ab dem Gehäuse erstreckbar ist, **dadurch gekennzeichnet, dass** der Abschnitt elastisch und aus einem elektrisch leitbaren Material ist, so dass er frei ab dem Gehäuse (3) erstreckbar ist.

2. Terminal nach Anspruch 1, **dadurch gekennzeichnet, dass** der verlängerte Abschnitt (13) an einem Längsende (15) der Schaltungskarte (11) befestigt ist.

3. Terminal nach Anspruch 1 oder 2, **dadurch gekennzeichnet, dass** der verlängerte Abschnitt einen elektrisch leitenden Draht umfasst.

4. Terminal nach Anspruch 3, **dadurch gekennzeichnet, dass** der verlängerte Abschnitt eine Reihe elektrisch leitender Drähte umfasst.

5. Terminal nach Anspruch 1 oder 2, **dadurch gekennzeichnet, dass** der verlängerte Abschnitt (13) einen Streifen (14) aus einem elektrisch leitenden Material oder ein elastisches Gitter umfasst.

6. Terminal nach Anspruch 5, **dadurch gekennzeichnet, dass** der Streifen Mittel (19) trägt, die es erlauben, ihn auf dem Gehäuse des Telefons zu befestigen, um mindestens teilweise die Schnittstelle Mensch-Maschine (5, 7) des Telefons zu schützen, vor allem im Ruhemodus.

7. Terminal nach einem der Ansprüche 1 bis 6, **dadurch gekennzeichnet, dass** der verlängerte Abschnitt (13) an seinem freien Ende ein Ballastmittel umfasst.

8. Terminal nach einem der Ansprüche 1 bis 7, **dadurch gekennzeichnet, dass** der verlängerte Abschnitt auf Ebene seines freien Endes Mittel zur elektrischen Verbindung mit einem Teil des Körpers eines Benutzers des Terminals trägt, so dass dieser eine zusätzliche Erweiterung des Massenplans der Schaltungskarte bildet.

9. Terminal nach Anspruch 8, **dadurch gekennzeichnet, dass** die Mittel zur elektrischen Verbindung eine Kapazität umfassen.

10. Terminal nach Anspruch 9, **dadurch gekennzeichnet, dass** der verlängerte Abschnitt mit einer elektrisch isolierenden Schicht beschichtet ist, so dass die Kapazität von dem Teil des verlängerten Abschnitts gebildet wird, die dazu bestimmt ist, mit einem Teil des Körpers des Benutzers im Kontakt zu sein, diesem Teil des Körpers des Benutzers und der Isolierschicht zwischen diesen zwei Teilen.
